# EUROPEAN PATENT APPLICATION

(11) **EP 2 400 711 A1**
(43) Date of publication of application: **28.12.2011**
(21) Application number: 10380086.8
(22) Date of filing: 22.06.2010
(51) Int. Cl.: H04L 29/06

(54) **System and method for the management of calls to landline or mobile phones from a computer**

(71) Applicant: Infomicro Comunicaciones S.L., 30009 Murcia (ES)
(72) Inventor: Cros Vera, Joaquin, 30110 Cabezo de Torres, Murcia (ES)
(74) Representative: Carvajal y Urquijo, Isabel

(57) **Abstract**

System and method for the management of calls to landline or mobile phones from a computer. The system comprises:
- a web activator (1') included on a webpage (2) of a web server (3);
- a client application (1) run by the web activator (1');
- a central server (4);
- a PBX (5);

Once the web activator (1') is activated, the client application (1) starts a connection with the central server (4) requesting (S2') the connection with a destination telephone (6). The central server (4) registers (S3') a SIP account in the PBX (5) by means of SIP packets. The PBX (5) starts a call (S4') to the destination telephone (6). The central server (4) receives (S5') the data stream sent in RTP packets by the destination telephone (6), redirects it (S6'), in RTMP packets, to the client application (1), receives (S6') the RTMP data stream of the client application (1) and sends it (S5') to the destination telephone (6) in RTP packets.

## Description

### Field of the invention

The present invention relates to the field of telecommunications, and more specifically, to the sending of calls to landline or mobile phones from a computer.

### Background of the invention

Nowadays there are known various communication systems offering the possibility of making telephone calls from a computer to a landline or mobile phone. One of them is Skype, which allows clients, by means of a button on a website, to open the application and call another Skype user or else a landline or a mobile phone.

In order to use Skype it is necessary to have the application installed in the client's operating system. In order to make any kind of call, the client must be registered as a Skype user. By being registered, the user can simply start a call to other Skype users. If the user wants to make a call to a landline or mobile phone, s/he has to pay a monthly subscription or buy credit into their account.

By contrast, the present invention enables to make calls between an internet user and a landline or mobile phone that is registered in a telephone exchange. This is achieved because the invention is a virtual telephone which is registered in the same telephone exchange. As it is an internal call, between telephones belonging to the same company that are registered in the same telephone exchange, there is no cost whatsoever.

### Description of the invention

The object of the present invention is a system and a method for the management of calls to landline or mobile phones from a computer, which solve the aforementioned problems. The system comprises:
- a web activator included on a webpage of a web server;
- a client application configured to start running by means of the activation of the web activator, being said activation performed on a computer web browser;
- a central server with RTMP streaming management capacity; and
- a PBX (Private Branch Exchange) with the capacity of establishing an IP communication and operating with the SIP protocol, and with a plurality of registered telephones and SIP accounts;
being the client application configured to, once the web activator is activated, start a connection with the central server by means of TCP packets requesting the connection with a determined destination telephone; being said central server configured to associate one of the SIP accounts subscribed in the PBX to said connection request and register said SIP account in the PBX by means of SIP packets, which is configured to start a call to the corresponding destination telephone according to the pre-configured telephone number, so that when the destination telephone answers the call a call between said destination telephone and the central server is established by means of SIP packets, being the central server configured to:
- receive the data stream sent in RTP packets by the destination telephone and redirect it in form of RTMP packets to the client application, and
- receive the RTMP data stream from the client application and send it to the destination telephone in form of RTP packets.

The client application is preferably configured to:
- reproduce in the computer the RTMP data stream that it receives from the central server;
- send, in form of RTMP packets to the central server, the audio and/or video data stream received through audiovisual data capture means connected to the computer.

In a preferred embodiment the web activator is a button in Flash and the client application may be a Flash application.

Another aspect of the present invention includes a method for the management of calls to landline or mobile phones from a computer, comprising:
- activating, on a computer web browser, a web activator included on a webpage of a web server;
- running, as an answer to the activation of the web activator, a client application;
- starting, by the client application, a connection with a central server with RTMP streaming management capacity by means of TCP packets, requesting the connection with a particular destination telephone;
- associating, by the central server, said connection request to a registered SIP account in a PBX,
- registering said SIP account in the PBX by means of SIP packets;
- starting the call to the corresponding destination telephone according to the pre-configured telephone number, so that when the destination telephone answers the call, a call between said destination telephone and the central server is established by means of SIP packets;
- receiving, the central server, the data stream sent in RTP packets by the destination telephone and redirect it in form of RTMP packets to the client application, and
- receiving, the central server, the RTMP data stream from the client application and sending it to the destination telephone in form of RTP packets.

The method may also comprise:
- reproducing in the computer the RTMP data stream that the client application (1) receives from the central server;
- sending, by the client application in form of RTMP packets, to the central server, the audio and/or video data stream received through audiovisual data capture means connected to the computer.

Not only does the invention offer audio streaming but it, also allows video streaming, allowing video conferences between users on the web. Secondly, the invention is not only capable of making a call but it can also receive calls. Taking into account these functionalities, the invention offers another format which is the conformation of a corporate intranet.

From this corporate intranet the user will be able to:
- have a list of the connected users, indicating if they are available on the intranet or in their landline phones. If the user they want to call is available on the intranet, they will be able to start a videoconference. If not, they will be simply able to start a telephone conversation.
- among the available users on the intranet, chat communications will be possible.
- send emails with the hyperlink in the signature so that they can be called via the

Internet. It will be possible to use said hyperlink not only in the emails sent from the intranet but also from any other email manager.

### Brief description of the drawings

There follows a very brief description of a series of drawings which will help understand the invention better particularly relating to an embodiment of said invention presented as a non-limiting example thereof.
Figure 1 shows, according to the state of the art, a communication system from a computer to another computer, a landline or mobile phone, using the Skype application.
Figure.2 shows a diagram of the operation of the communication system used in the present invention.

### Detailed description of the invention

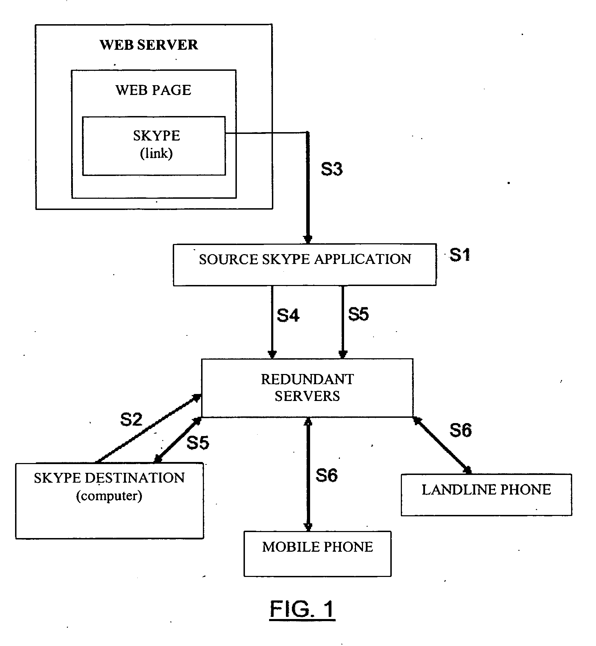

**Figure 1** shows the operation of the communication system from a computer to another computer, a landline or mobile phone, using the Skype application, according to the state of the art. Skype allows not only voice communication between users, but it also offers videoconference, text chat, and document sending. In the scope of the present invention "computer" includes not only desktops and laptops, but also in general any electronic device with data processing capability and Internet connection.

Its main disadvantage is that one of the communication participants must be obligatory registered in Skype, that is, they must have an account and have the Skype application installed and running in their operating system.

Skype offers the user the possibility of placing a link on the user's webpage and thus any internet user may add her/him to their contact list and talk to her/him. The operation of Skype is as follows:
S1. The user who wants to make a call from a webpage (caller) must have Skype (source Skype application) installed in her/his computer.
S2. The webpage owner (the called party) must have the client Skype (destination Skype) installed and running in order to receive calls.
S3. The caller clicks on the webpage link (Skype link) to start a call. In fact, this action opens Skype and starts the call from the application (not from the website).
S4. The Skype of the caller (source Skype) is executed, if it was not running already, and starts the connection with the servers and thus making the Skype of the called party (destination Skype) ring.
S5. The called party answers the call and thus the voice begins to be transmitted by means of a Skype proprietary protocol between both clients (caller and the called party).
S6. Skype also offers the possibility of making a call to a landline or mobile phone but to do this the client must have an annual or a monthly subscription or simply have credit.

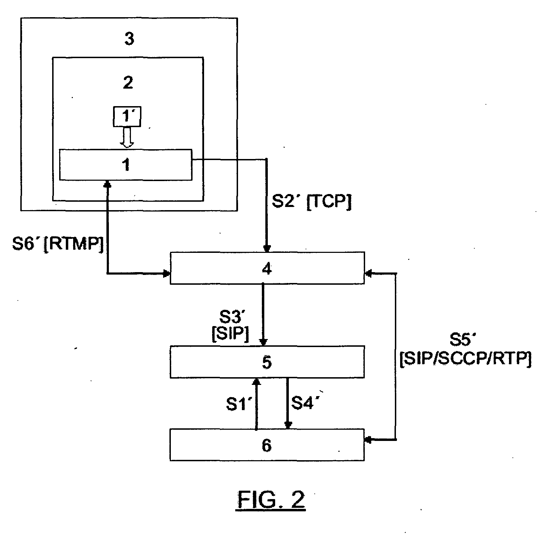

**Figure 2** shows the operation of the present invention. The invention mainly comprises a client application 1, preferably a flash application, which is started by means of a web activator 1' shown on a webpage 2 (in a preferred embodiment a button in flash, for example with the text "CALL", but it really accepts any type of web activator 1', enabling to configure and design the button adapting it to the design of the webpage 2 on which it will be implemented), and a central server 4, preferably a RED5 server, but there exist other alternatives such as FMS (Adobe Flash Media Server), Adobe LiveCycle Data Services, WebORB, Wowza, Unreal Media Server and any other RTMP/AMF server. The web activator 1' has to be housed in a web server 3 and in a different piece of equipment, or in the same, and the central server 4 has to be configured. In order to make a call it is necessary to establish the connection between the central server 4 and a PBX 5 (or telephone exchange).

A PBX 5 is a telephone exchange that acts as a ramification of the public switched telephone network (PSTN), so the users do not call abroad by means of conventional telephone lines. The PBX is the one that is connected to the PSTN. In this way, the users must be registered in it in order to be able to make calls abroad or make internal calls between PBX users, which would be for free. Although there exist analogical/digital and digital telephone exchanges, in order to be able to use the invention it is a requirement that the telephone exchange be capable of establishing IP communication and also operating with the SIP protocol.

The central server 4 used in a preferred embodiment is a Red5 server, which is an open source server developed with Java technology, in contrast to its homologous Flash Media Server which must be paid for. Apart from being a Java server, the main characteristic of this server is its RTMP stream management capacity. The RTMP protocol was developed by Adobe System to transmit audio, video and data streams between Flash players and a server. In this way, by means of this server it is possible to make videoconferences, audio conferences, as well as text messaging (chat). It can operate in the same computer where the web server 3 is installed, as long as one has complete control thereof. If the web server 3 is contracted to third parties, having an additional computer will be a requirement.

The web server 3 is a computer with greater features than those of a desktop computer which has installed a program for transferring hypertexts, web pages or HTML pages (texts, images, forms, animations). There may be two cases. The first case is when the client has a website housed in an external server, that is, s/he has the hosting service through a third party. The second case is when the client has her/his own hosting servers, being able in this way to offer her/his website to external users or establishing an intranet between her/his employees. The client application may be installed in any operating system (Linux, Windows), in any type of server (tomcat, IIS, websphere, etc.) and it is not a requirement to have a programming language whatsoever (java, php, aspx, etc.).

The web browser is a program (e.g. Internet Explorer, Firefox, Opera, Safari ...) that allows watching and interacting with HTML contents and pages of a website, showing the webpage 2. For the preferred embodiment, in which the web activator 1' is a button in flash, each web browser that wants to use the invention will have to have the Adobe Flash plug-in installed.

In a usual operation, the invention operates in the following way:
S1'. The PBX 5 has registered telephones.
S2'. The user, from a webpage, starts a call by pushing the flash button "CALL". The client application 1 which is on the webpage 2 starts the connection with the central server 4 by means of TCP packets. Each one of the buttons which are implemented on the webpage 2 has the number they have to call configured through a XML file. In said file the number is encoded, thus avoiding possible attacks by third parties who want to modify it in order to make calls to other numbers. The central server 4, when receiving the request with the encoded number, decodes it and afterwards starts the requested call. Therefore, the client application 1 only sends the number it wants to call, but encoded.
S3'. The central server 4 receives the request and associates one of the SIP accounts which have been previously subscribed in the PBX 5 to that request. Once associated, it registers the SIP account in the PBX 5 by means of SIP packets.
S4'. If the register is successful, the PBX 5 starts a call to the corresponding telephone 6, according to the pre-configured telephone number. This number may be an internal extension of the company that owns the PBX 5, or it may be an external telephone number, either a landline or a mobile phone. Each SIP account has a unique telephone number; the central server 4 when receiving the call start request from the client application 1 randomly uses one of these SIP accounts previously created in the PBX 5.
S5'. When the destination telephone answers the call, signaling of an established call between said telephone and the central server 4 will be automatically sent. This signaling may be SIP, in the case of any landline or mobile phone, or SCCP in the case of Cisco phones. Finally, the telephone starts sending the audio in RTP packets and from the server they are redirected (S6') to the webpage 2 as RTMP packets and vice versa (when the call is answered the RTMP audio stream is transmitted from the client application 1 on the website towards the central server 4, which converts the stream into RTP for sending it to a destination telephone 6).

The video transmission is on RTMP packets as well. In order to start a videoconference it is necessary that both participating users are registered and connected in the client application 1. The operation procedure is as follows:
- The source user will notify, by means of her/his client application, the destination user about the start of the videoconference. The user will have to previously connect their web cam and headsets with microphone to their computers; otherwise they will not be able to start it. This notification is done by means of TCP packets from the client application 1 to the central server 4.
- The destination user will receive a confirmation message requesting if s/he wants to start said videoconference. If s/he does not have a web cam or a headset with microphone, unlike the source user, s/he will be also able to start it, except that s/he will not be able to send audio or video. The' confirmation message is sent by TCP from a central server to the destination client application and the answer is directed in the opposite direction but on TCP as well.
- Once the destination user's acceptance is received, the central server begins to capture the RTMP audio and video stream sent from the source user's client application. '
- The RTMP stream is sent from the central server to the destination user's client application.
- If the destination user has a web cam or a headset with a microphone, this audio and video stream is sent in RTMP packets from the destination user's client application to the central server 4 and from there to the source user's client application.

Any landline or mobile phone is capable of receiving the calls made from the client application 1, whether they are internal numbers of the company or external numbers. Only those devices that have the capacity of using XML services will be able to make calls to users registered in the same PBX of the source user.

It is not necessary for the central server 4 to be in the same server where the website is housed. Optionally on the same webpage 2 it is possible to have two or more buttons or web activators which allow starting a telephone call as long as the same number of SIP accounts as buttons or possible simultaneous calls that one wants to allow are configured in the PBX 5.

Therefore, the present invention has two well-defined structures: client and central server 4. The client part may be implemented as a single flash application offering all the functionalities integrated, by means of the management of internal windows or as a group of flash applications, each one with a specific functionality. In this way, it is possible to maintain the layout of the website on which it is installed and have the same functionalities according to the client's convenience. The central server 4 is developed in java and is in charge of generating SIP messages for establishing the connection with the PBX 5, converting the RTMP packets into RTP packets, managing the users registered in the invention, managing the use of the functionalities by the users and managing the availability of SIP accounts.

As the invention uses the client-server model, the client is a HTML button that by means of javascript maintains communication with a client application 1 in flash, which is on the same webpage 2 from which one wants to start the call to a pre-established number. In this way, the flash maintains the communication with the central server 4 sending and receiving the RTMP audio stream from the client's web browser.

For the system configuration it can be used a Tomcat web server, which is an open source web server written in Java with servlets support and Java Server Pages (JSP's). The function of this server is offering, by means of a control panel, the administration of the invention:
- User management
- Permission management
- User's profile management
- Management of each one of the functionalities of the invention
- Central server 4 configuration
- Interconnection with PBX 5 configuration

The Tomcat may be installed in the same computer as the web server is, and it may even be the web server where the invention-client will be installed.

## Claims

1. System for the management of calls to landline or mobile phones from a computer, comprising:
- a web activator (1') included on a webpage (2) of a web server (3);
- a client application (1) configured to start running by the activation of the web activator (1'), being said activation performed on a computer web browser; **characterized in that** it additionally comprises:
- a central server (4) with RTMP stream management capability; and
- a PBX (5) with the capacity of establishing IP communication and operating with the SIP protocol, and with a plurality of registered telephones and subscribed SIP accounts;
being the client application (1) configured to, once the web activator (1') is activated, start a connection with the central server (4) by means of TCP packets requesting (S2') the connection with a determined destination telephone (6); being said central server (4) configured to associate one of the SIP accounts subscribed in the PBX (5) to said connection request and register (S3') said SIP account in the PBX (5) by means of SIP packets, which is configured to start a call (S4') to the corresponding destination telephone (6) according to the pre-configured telephone number, so that when the
destination telephone (6) answers the call, a call between said destination telephone (6) and the central server (4) is established (S5') by means of SIP packets, being the central server (4) configured to:
- receive (S5') the data stream sent in RTP packets by the destination telephone (6) and redirect it (S6') in form of RTMP packets to the client application (1), and
- receive (S6') the RTMP data stream from the client application (1) and send it (S5') to the destination telephone (6) in form of RTP packets.

2. System according to claim 1, where the client application (1) is configured to:
- reproduce in the computer the RTMP data stream received (S6') from the central server (4);
- send (S6'), in form of RTMP packets to the central server (4), the audio and/or video data stream received through audiovisual data capture means connected to the computer.

3. System according to any of the preceding claims, where the web activator (1') is a button in Flash and the client application (1) is a Flash application.

4. System according to any of the preceding claims, where the central server (4) is any of the following servers: RED5, FMS, Adobe LiveCycle Data Services, WebORB, Wowza, Unreal Media Server.

5. Method for the management of calls to landline or mobile phones from a computer, **characterized in that** it comprises:
- activating, on a computer web browser, a web activator (1') .included on a webpage (2) of a web server (3);
- running, as an answer to the activation of the web activator (1'), a client application (1);
- starting, by the client application (1), a connection with a central server (4) with RTMP stream management capacity by means of TCP packets, requesting (S2') the connection with a particular destination telephone (6);
- associating, by the central server, a subscribed SIP account in a PBX (5) to said connection request;
- registering (S3') said SIP account in the PBX (5) by means of SIP packets;
- starting the call (S4') to the corresponding destination telephone (6) according to the pre-configured telephone number, so that when the destination telephone (6) answers the call, a call between said destination telephone, (6) and the central server (4) is established (S5') by means of SIP packets;
- receiving (S5'), the central server (4), the data stream sent in RTP packets by the destination telephone (6) and redirect it (S6') in form of RTMP packets to the client application (1), and
- receiving (S6'), the central server (4), the RTMP data stream from the client application (1) and send it (S5') to the destination telephone (6) in form of RTP packets.

6. Method according to claim 5, comprising:
- reproducing in the computer the RTMP data stream that the client application (1) receives (S6') from the central server (4);
- sending (S6'), by the client application (1) in form of RTMP packets to the central server (4), the audio and/or video data stream received through audiovisual data capture means connected to the computer.

7. Method according to any of the preceding claims 5 to 6, where the web activator (1') is a button made in Flash and the client application (1) is a Flash application.

8. Method according to any of the claims 5 to 7, where the central server (4) is any of the following servers. RED5, FMS, Adobe LiveCycle Data Services, WebORB, Wowza, Unreal Media Server.
